(19) Europäisches Patentamt / European Patent Office / Office européen des brevets

(11) **EP 3 584 097 A1**

(12) **EUROPEAN PATENT APPLICATION**

(43) Date of publication:
**25.12.2019  Bulletin 2019/52**

(51) Int Cl.:
**B60G 3/20** *(2006.01)*  **B60G 21/02** *(2006.01)*
**B62K 5/10** *(2013.01)*

(21) Application number: **19180579.5**

(22) Date of filing: **17.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.06.2018  US 201816013056**

(71) Applicant: **Volvo Car Corporation**
**40531 Göteborg (SE)**

(72) Inventors:
• **FRASHER, Douglas Hall**
  **Newbury Park, CA 91320 (US)**
• **ABELE, Lawrence E.**
  **Camarillo, CA 93010 (US)**

(74) Representative: **Kransell & Wennborg KB**
**P.O. Box 2096**
**403 12 Göteborg (SE)**

(54) **CHASSIS-BASED FORCE NULLIFICATION SYSTEMS AND METHODS FOR SEATED AND STANDING VEHICLE OCCUPANTS**

(57)    Systems and methods for nullifying lateral and longitudinal acceleration forces experienced by an occupant (10) of a vehicle in a seated or standing position while the vehicle is traveling along a travel surface, the system and methods including: a chassis structure (50); and an occupant cell structure (60) defined by the chassis structure (50); wherein the chassis structure (50) includes an upper link (56) pivotably coupled to each of a first wheel assembly (54) and a second wheel assembly (54) and the occupant cell tructure (60) and a lower link (58) pivotably coupled to each of the first wheel assembly (54) and the second wheel assembly (54) and the occupant cell structure (60); and wherein the upper link (56) and the lower link (58) define a parallelogram (52) and are configured to translate with respect to one another maintaining parallel sides of the parallelogram (52), leaning the first wheel assembly (54), the second wheel assembly (54), and the occupant cell structure (60) in unison with respect to the travel surface.

FIG. 7

**Description**

FIELD OF THE DISCLOSURE

The present disclosure relates generally to chassis-based force nullification systems and methods for seated and standing vehicle occupants. More specifically, the present disclosure relates to chassis-based force nullification systems and methods for seated and standing vehicle occupants that allow the chassis and occupant cell to pivot laterally with respect to a travel plane, such as a road surface, as the vehicle subjects the occupant to lateral and vertical forces. These systems and methods may be passive or active and provide enhanced occupant comfort during vehicular maneuvers, such as curve navigation, in both driver assist and autonomous applications. The systems and methods may be extended conceptually to the nullification of longitudinal forces as well.

BACKGROUND OF THE DISCLOSURE

A vehicle negotiating a roadway, for example, subjects a vehicle occupant to lateral, longitudinal, and vertical forces. These forces require the occupant to utilize his or her muscles to retain his or her upright posture, potentially resulting in discomfort and/or fatigue over time. Conventional vehicles designed primarily to maintain occupant comfort typically limit lateral and longitudinal accelerations to a maximum of about 0.3 g, allowing them to maintain safe and comfortable driving behavior relative to the surrounding environment and traffic. This is especially true of vehicles operating autonomously. Within this limit, the rigid chassis and occupant cell are designed to allow the occupant, whether seated or standing, to passively achieve a lean angle that balances lateral and/or longitudinal forces while negotiating a curve or hill, for example. Vertical forces are typically accommodated by conventional passive and active suspension systems, well known to those of ordinary skill in the art.

What are still needed in the art, however, are systems and methods that proactively nullify even these lower lateral (and longitudinal) accelerations such that occupant comfort is further enhanced. Such chassis-based force nullification systems and methods are provided by the present disclosure and may operate in a passive or active manner.

BRIEF SUMMARY OF THE DISCLOSURE

In various exemplary embodiments, the present disclosure provides chassis-based force nullification systems and methods for seated and standing vehicle occupants that allow the chassis and occupant cell to pivot laterally with respect to a travel plane, such as a road surface, as the vehicle subjects the occupant to lateral and vertical forces. These systems and methods may be extended conceptually to the nullification of longitudinal forces as well. The systems and methods utilize gravity to, in part, nullify lateral and/or longitudinal occupant accelerations, moving them to intermediate planes between pure lateral and/or longitudinal and pure vertical. Optionally, related to lateral acceleration, the systems and methods could allow the occupant, through the occupant cell and/or chassis, to rotate about a longitudinal pivot such that a resultant of the lateral and gravitational forces aligns with a line drawn between the virtual longitudinal pivot point and the center of mass of the rotatable body. Optionally, related to longitudinal acceleration, the systems and methods could allow the occupant, again through the occupant cell and/or chassis, to rotate about a transverse pivot such that a resultant of the longitudinal and gravitational forces aligns with a line drawn between the virtual transverse pivot point and the center of mass of the rotatable body. Vertical acceleration is dealt with via conventional passive and active suspension system principles, well known to those of ordinary skill in the art.

Although primarily road vehicles (such as cars, trucks, and the like) are used as illustrative examples herein, it will be readily apparent to those of ordinary skill in the art that the systems and methods of the present disclosure are equally applicable to marine, air, space, and other vehicle systems in the broadest sense.

In one exemplary embodiment, the present disclosure provides a system for nullifying one or more of lateral and longitudinal acceleration forces experienced by an occupant of a vehicle in a seated or standing position while the vehicle is traveling along a travel surface, the system including: a chassis structure; and an occupant cell structure one of coupled to and defined by the chassis structure; wherein the chassis structure includes an upper link pivotably coupled to each of a first wheel assembly and a second wheel assembly and the occupant cell and a lower link pivotably coupled to each of the first wheel assembly and the second wheel assembly and the occupant cell; and wherein the upper link and the lower link define a parallelogram and are configured to translate with respect to one another maintaining parallel sides of the parallelogram, thereby leaning the first wheel assembly, the second wheel assembly, and the occupant cell in unison with respect to the travel surface. Optionally, the system is operable for nullifying lateral acceleration forces and the upper link and the lower link are configured to translate transversely with respect to one another maintaining the parallel sides of the parallelogram, thereby leaning the first wheel assembly, the second wheel assembly, and the occupant cell transversely in unison with respect to the travel surface. Each of the first wheel assembly and the second wheel assembly is configured to both lean and rotate with respect to the chassis structure. The occupant cell structure includes one of a seated support and a standing support for an occupant. The occupant cell structure is configured to lean within ±17 degrees from a perpendicular plane with respect to the travel surface. Optionally, the occupant cell structure is configured to lean with active assistance of one or more actuation mechanisms coupled to one or more controllers. Optionally, the occupant cell structure is configured to lean with the active assistance of the one or more actuation mechanisms coupled to the one or more controllers responsive to attitude/inclination feedback from one or more sensors. Alternatively, the occupant cell structure is configured to lean with the active assistance of the one or more actuation mechanisms coupled to the one or more controllers responsive to attitude/inclination feedback from one or more cameras.

In another exemplary embodiment, the present disclosure provides a method for nullifying one or more of lateral and longitudinal acceleration forces experienced by an occupant of a vehicle in a seated or standing position while the vehicle is traveling along a travel surface, the method including: providing a chassis structure; providing an occupant cell structure one of coupled to and defined by the chassis structure; and leaning the occupant cell with respect to the travel surface; wherein the chassis structure includes an upper link pivotably coupled to each of a first wheel assembly and a second wheel assembly and the occupant cell and a lower link pivotably coupled to each of the first wheel assembly and the second wheel assembly and the occupant cell; and wherein the upper link and the lower link define a parallelogram and are configured to translate with respect to one another maintaining parallel sides of the parallelogram, thereby leaning the first wheel assembly, the second wheel assembly, and the occupant cell in unison. Optionally, the method is operable for nullifying lateral acceleration forces and the upper link and the lower link are configured to translate transversely with respect to one another maintaining the parallel sides of the parallelogram, thereby leaning the first wheel assembly, the second wheel assembly, and the occupant cell transversely in unison with respect to the travel surface. Each of the first wheel assembly and the second wheel assembly is configured to both lean and rotate with respect to the chassis structure. The occupant cell structure includes one of a seated support and a standing support for an occupant. The occupant cell structure is configured to lean within ±17 degrees from a perpendicular plane with respect to the travel surface. Optionally, the occupant cell structure is configured to lean with active assistance of one or more actuation mechanisms coupled to one or more controllers. Optionally, the occupant cell structure is configured to lean with the active assistance of the one or more actuation mechanisms coupled to the one or more controllers responsive to attitude/inclination feedback from one or more sensors. Alternatively, the occupant cell structure is configured to lean with the active assistance of the one or more actuation mechanisms coupled to the one or more controllers responsive to attitude/inclination feedback from one or more cameras.

BRIEF DESCRIPTION OF THE DRAWINGS

The present disclosure is illustrated and described herein with reference to the various drawings, in which like reference numbers are used to denote like system components/method steps, as appropriate, and in which:

FIG. 1 is a schematic diagram illustrating the effect of lateral acceleration on a vehicle occupant and the operational principle of the present disclosure;

FIG. 2 is a schematic diagram illustrating the effect of longitudinal acceleration on a vehicle occupant and the operational principle of the present disclosure;

FIG. 3 is another schematic diagram illustrating the effect of longitudinal acceleration on a vehicle occupant and the operational principle of the present disclosure;

FIG. 4 is a schematic diagram illustrating the calculation of an optimal maximum occupant lateral (and/or longitudinal) lean angle for comfortable driving in accordance with the systems and methods of the present disclosure;

FIG. 5 is a schematic diagram illustrating a plurality of schemes for providing g-force nullifying lateral (and/or longitudinal) lean in accordance with the systems and methods of the present disclosure;

FIG. 6 is a series of perspective views of lateral and longitudinal test rigs demonstrating the operation of the concepts of the present disclosure;

FIG. 7 is a schematic diagram illustrating one exemplary embodiment of the chassis-based force nullification system of the present disclosure; and

FIG. 8 is a schematic diagram illustrating one exemplary embodiment of a control system for the chassis-based force nullification system of the present disclosure.

DETAILED DESCRIPTION OF THE DISCLOSURE

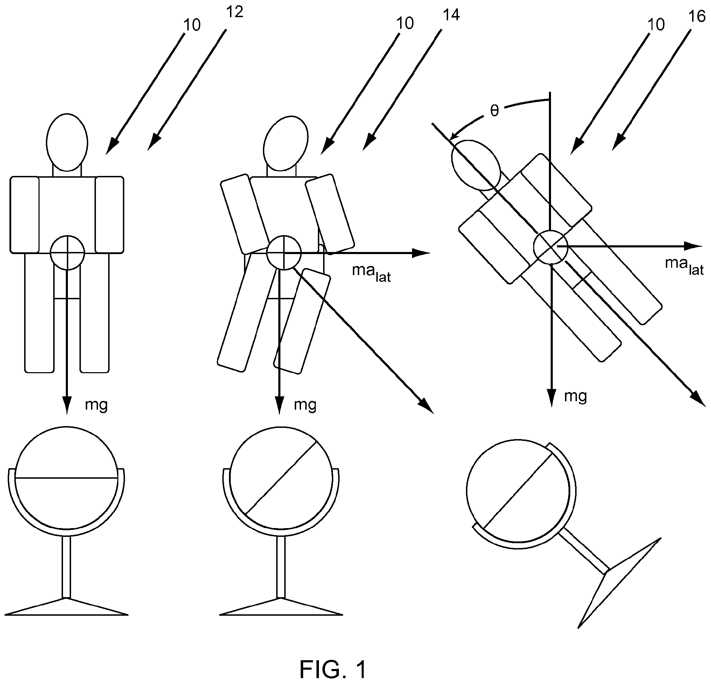

Referring now specifically to FIG. 1, a vehicle occupant 10 is illustrated experiencing no lateral acceleration 12, experiencing 1 g of lateral acceleration 14, and experiencing 1 g of lateral acceleration as nullified by the systems and methods of the present disclosure 16. With no lateral acceleration 12, only a vertical gravity force is present and acts upon the occupant 10, which the occupant 10 feels through his or her seating surface, if seated, or feet, if standing. With 1 g lateral acceleration 14, both a vertical gravity force and lateral acceleration force are present and act upon the occupant 10, both of which the occupant 10 feels through his or her seating surface, if seated, or feet, if standing, and through his or her posture-support muscles. The resultant force experienced by the occupant 10 lies between the vertical gravity force and the lateral acceleration force. With 1 g lateral acceleration and nullification 16, both a vertical gravity force and lateral acceleration force are again present and act upon the occupant, both of which the occupant 10 would feel through his or her seating surface, if seated, or feet, if standing, and through his or her posture-support muscles. Again, the resultant force experienced by the occupant 10 would lie between the vertical gravity force and the lateral acceleration force. However, the occupant 10 is allowed to pivot and lean at an angle, θ, such that his or her posture-support muscles are not taxed. The occupant 10 feels "heavier," but does not feel conventional side forces as a vehicle navigates a curve, for example. This is the same principle implicated by a leaning bicyclist or motorcycle rider. It is also the same principle that prevents a vehicle from sliding down a steeply banked curve. Lateral acceleration is negated, in part, using gravity.

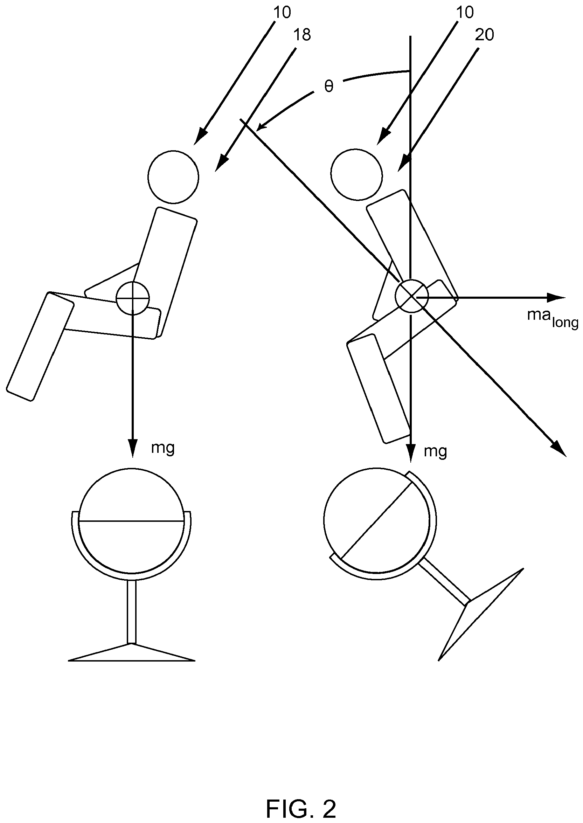

Referring now specifically to FIG. 2, a vehicle occupant 10 is illustrated experiencing no longitudinal acceleration 18 and experiencing 1 g of longitudinal acceleration as optionally nullified by the systems and methods of the present disclosure 20. With no longitudinal acceleration 18, only a vertical gravity force is present and acts upon the occupant 10, which the occupant 10 feels through his or her seating surface, if seated, or feet, if standing. With 1 g longitudinal acceleration 20, both a vertical gravity force and longitudinal acceleration force are present and act upon the occupant, both of which the occupant 10 would feel through his or her seating surface, if seated, or feet, if standing, and through his or her posture-support muscles. The resultant force experienced by the occupant 10 would lie between the vertical gravity force and the longitudinal acceleration force. However, the occupant 10 is allowed to pivot and lean at an angle, θ, such that his or her posture-support muscles are not taxed. The occupant 10 feels "heavier," but does not feel conventional pitch forces as a vehicle navigates a rapid descent, for example. Longitudinal acceleration is negated, in part, using gravity.

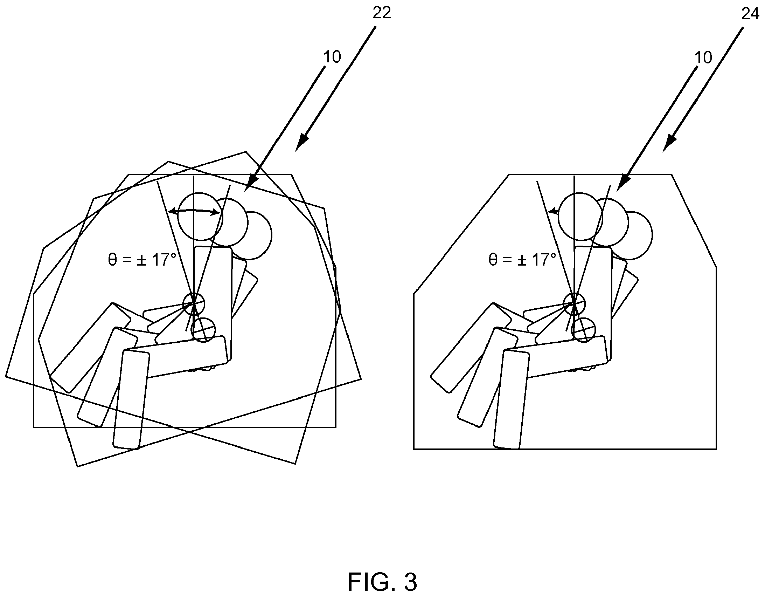

Referring now specifically to FIG. 3, as comfortable driving generates a maximum occupant longitudinal acceleration (for example) of 0.3 g, a useful maximum tilt angle is within about ±17 degrees. This rotation may be imparted to the occupant 10 through the occupant cell and/or chassis 22 (as described in greater detail herein), or through the occupant seat 24 (not described in greater detail herein). These configurations each present unique technical challenges.

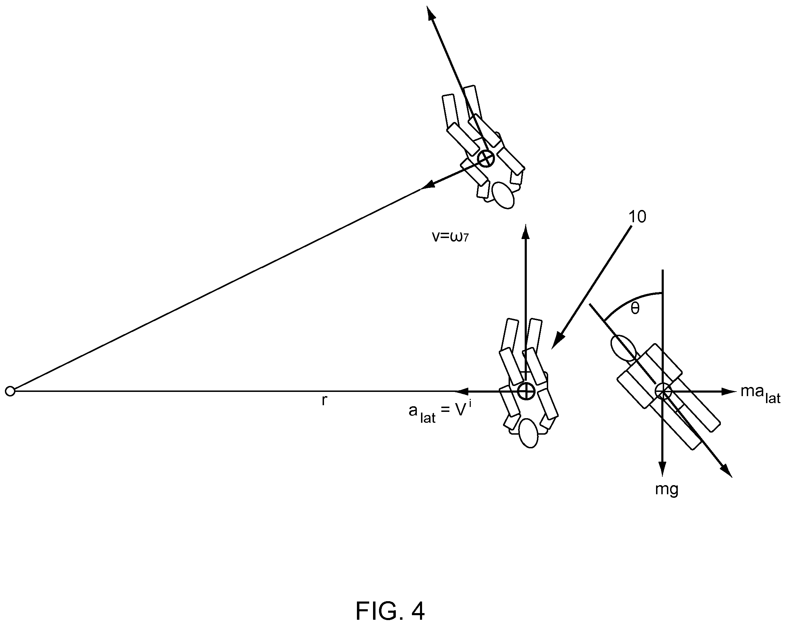

FIG. 4 illustrates the calculation of an optimal maximum occupant lateral (and/or longitudinal) lean angle, θ, for comfortable driving in accordance with the g-force nullifying systems and methods of the present disclosure.

$$\text{Lean Angle } \theta(\text{deg}) = 180/\pi * \tan^{-1}(ma_{lat}/mg) = 180/\pi * \tan^{-1}(a_{lat}/g) \quad (1)$$

This figure shows approximately 1 g of lateral acceleration, giving a lean angle of 45 degrees. This would be required if the goal was related to achieving maximum cornering speed. The goal, however, is typically to achieve maximum comfort. Comfortable driving generates an approximate maximum lateral acceleration of 3.0 m/s$^2$. This gives a lean angle of:

$$\theta = \frac{180}{\pi} * \tan^{-1}\left(\frac{3.0}{9.81}\right) = 16.7 \text{ degrees.} \quad (2)$$

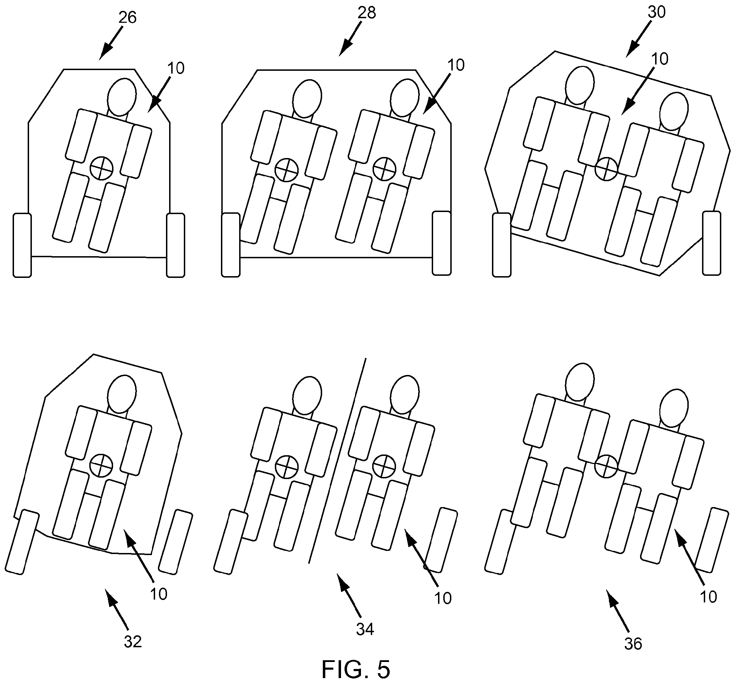

Referring now specifically to FIG. 5, there are several configurations that may be utilized to provide desired occupant lean, laterally, for example. Some of the same principles apply to longitudinal lean as well. The first and second configurations 26 and 28 lean the occupants 10 individually within the passenger compartment of a conventional chassis or the like, without correspondingly leaning the chassis. No significant benefit to tire load is provided. These configurations are not addressed in detail herein. The third configuration 30 leans the occupants 10 collectively within the passenger compartment of a conventional chassis or the like, without correspondingly leaning the chassis, such as by leaning the occupant cell or the like. Again, no significant to tire load is provided and imbalance difficulties may be encountered, as described in greater detail herein below. The fourth configuration 32 leans the occupant 10 by leaning the chassis and/or the occupant cell. As the tires lean as well, tire load benefit is provided. This is a focus of the present disclosure. The fifth configuration 34 leans the occupants 10 by leaning the chassis and/or the occupant cell. As the tires lean as well, tire load benefit is again provided. Here, however, to save space, the occupants 10 are allowed some vertical movement relative to one another, introducing some design and implementation complexity. The sixth configuration 36 leans the occupants 10 by leaning the chassis and/or the occupant cell. As the tires lean as well, tire load benefit is again provided. Here, however, the occupants 10 are allowed no vertical movement relative to one another, requiring extra space and introducing some imbalance concerns.

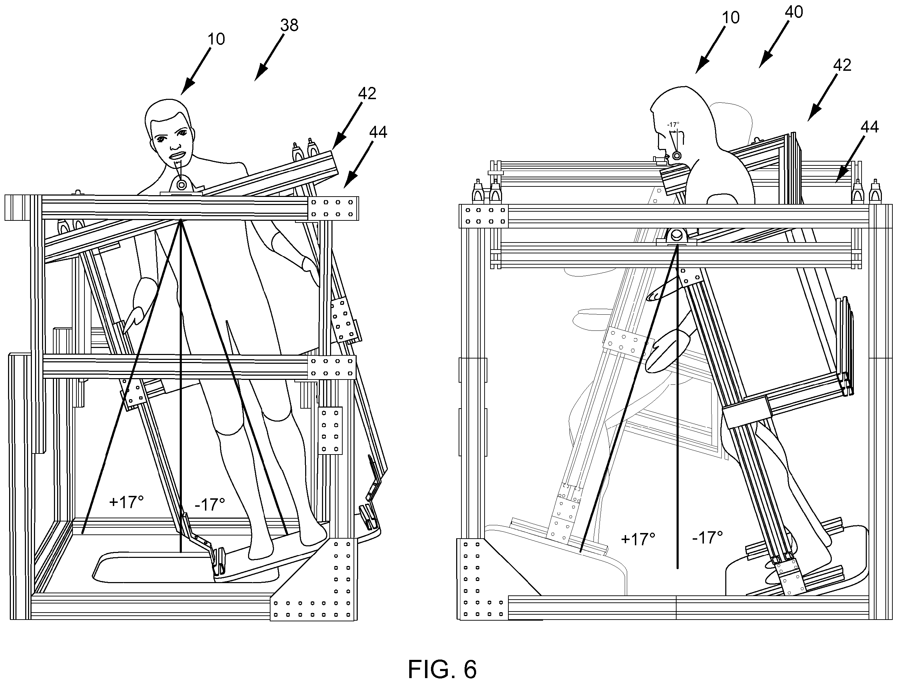

FIG. 6 is a series of perspective views of lateral and longitudinal test rigs 38 and 40 demonstrating the operation of the concepts of the present disclosure. In both test rigs 38 and 40, the occupant cell 42 and/or chassis 44 is/are allowed to pivot up to $\pm 17$ degrees, correspondingly pivoting the occupant 10, laterally and/or longitudinally. In both directions, the center of rotation should be below the center of mass for the rotating body in order to enable passive rotation. This effectively creates a pendulum. The motion of the pendulum is well behaved if it finds equilibrium immediately in response to the lateral force/longitudinal force without overshoot or undershoot. Inertial effects and friction affect this behavior. Experiments suggest that the moment of inertia of a human body combined with a seat, for example, tend to give stable good behavior with pivot locations somewhere between 20-100 mm above/below the center of gravity. Some friction can be tolerated, but ideally is minimal. In many embodiments, that the lean provided is active lean, triggered by motion sensors or cameras that sense vehicle motion and implemented by a control system and servo mechanisms.

Again, in various exemplary embodiments, the present disclosure provides chassis-based force nullification systems and methods for seated and standing vehicle occupants that allow the chassis and occupant cell to pivot laterally with respect to a travel plane, such as a road surface, as the vehicle subjects the occupant to lateral and vertical forces. These systems and methods may be extended conceptually to the nullification of longitudinal forces as well. The systems and methods utilize gravity to, in part, nullify lateral and/or longitudinal occupant accelerations, moving them to intermediate planes between pure lateral and/or longitudinal and pure vertical. Related to lateral acceleration, the systems and methods allow the occupant, through the occupant cell and/or chassis, to rotate about a longitudinal pivot such that a resultant of the lateral and gravitational forces aligns with a line drawn between the virtual longitudinal pivot point and the center of mass of the rotatable body. Related to longitudinal acceleration, the systems and methods allow the occupant, again through the occupant cell and/or chassis, to rotate about a transverse pivot such that a resultant of the longitudinal and gravitational forces aligns with a line drawn between the virtual transverse pivot point and the center of mass of the rotatable body. Vertical acceleration is dealt with via conventional passive and active suspension system principles, well known to those of ordinary skill in the art.

Although primarily road vehicles (such as cars, trucks, and the like) are used as illustrative examples herein, it will be readily apparent to those of ordinary skill in the art that the systems and methods of the present disclosure are equally applicable to marine, air, space, and other vehicle systems in the broadest sense.

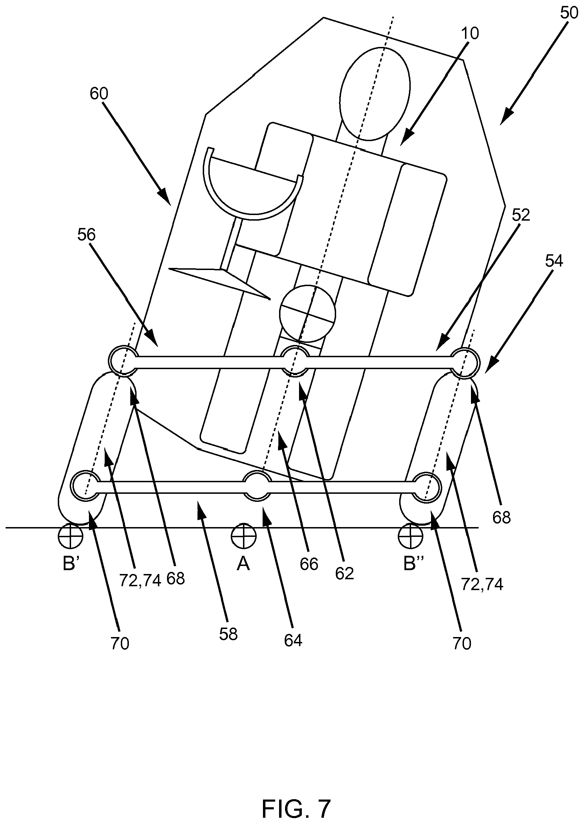

Referring now specifically to FIG. 7, in one exemplary embodiment (focusing on lateral g-force nullification), the chassis structure 50 of the present disclosure structurally defines a pure parallelogram 52 disposed transversely between the wheels 54 at both the front and rear axles of a vehicle, for example. The parallelogram's two parallel links 56 and 58 are each pivotably attached to the occupant cell structure 60, which is allowed rotation about a longitudinal axis in the vehicle's centerline vertical plane. Specifically, the upper link 56 and lower link 58 of the parallelogram 52 are allowed to translate transversely with respect to one another within a substantially parallel construct. The associated pivots 62 and 64 with the occupant cell structure 60 collectively define a central plane 66 that pivots with the occupant cell structure 60. In this exemplary embodiment, the occupant cell structure 60 may be coupled to or part of and defined by the remainder of the chassis structure 50. Preferably, the upper link 56 and lower link 58 are physical structures, although virtual links could also be used. At each axle and wheel 54, and symmetrically about the vehicle's centerline vertical plane, each parallel link 56 and 58 is terminated with a pivot 68 and 70 that define pivoting planes 72 in pairs that are parallel to the aforementioned central plane 66. The pivots 68 and 70 of the parallel links 56 and 58 and chassis structure 50 support an upright 74 at each end that suspends the associated wheel 54 and its steering tube (not illustrated). This configuration results in the occupant cell structure 60 and the wheels 54 rotating, or leaning, in nearly perfect unison with respect to an angle at which the resultant of the component lateral forces and gravitational forces for each rotatable center of mass is in line with the centerline plane of the respective rotatable system. This effectively nullifies the lateral force that the occupant 10 would otherwise be subjected to, as he or she is part of the collective rotatable system when held secure in the occupant cell structure 60. Additional benefits may arise at the wheel systems as well due to the lack of forces acting in any direction other than the centerline plane of each wheel system. The tire's contact section is accordingly designed as an arc to allow for this rotation relative to the contact patch.

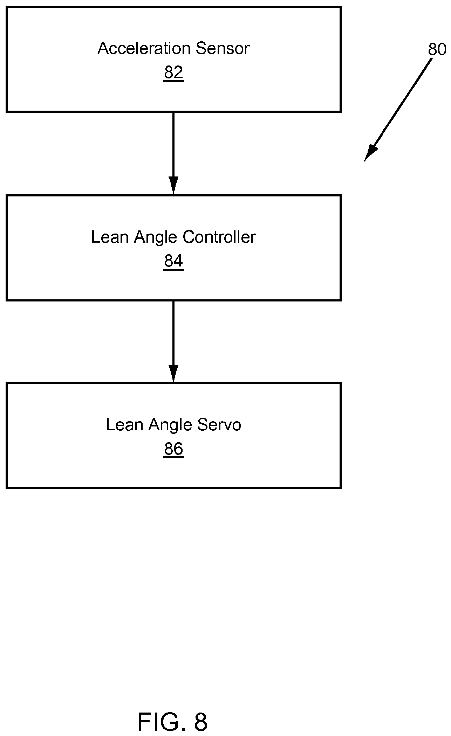

The control of the occupant lean angle achieved by the chassis structure 50 in order to balance the lateral force(s) imposed during traversing a curve may be achieved by several methods. One such method is to allow control to happen naturally by passive means. This necessitates an understanding of how a bicycle or motorcycle accomplishes the same thing. With respect to a bicycle or motorcycle, the rider makes very subtle control inputs in order to execute a turn. The turn is first initiated by the rider creating a slight imbalance in the direction in which he or she wants to go. This can be done by several subtle, almost unconscious actions that either turn the front wheel in the opposite direction and/or distribute some amount of mass in such a way as to overweigh the side in the direction of the turn. As the bicycle or motorcycle then begins to fall in the desired direction, the rider again makes subtle actions to achieve a state of balance in the turn. The geometry of the bicycle or motorcycle's steered wheel is essential in allowing this process to happen naturally. In the leaning chassis structure 50, the occupant 10 is assumed to be sufficiently detached from the process that such subtle actions by him or her are insufficient for adequate control. Thus, a servo mechanism 86 (FIG. 8) is designed to create the state of imbalance necessary to initiate a turn by actively rotating the occupant cell structure 60 relative to the parallelogram 52 at the central pivots 62 and 64 in the direction of the turn. The wheels' geometry, having the required amount of rake and trail, then allows the wheels 54 to passively steer, by virtue of all of the forces and moments then acting about the steering axis, to an angle that creates the correct steer angle between the front and rear wheels 54 such that the vehicle follows the curved path that the vehicle is negotiating. Corrections are continuously applied to the lean angle to effect the steer angle and follow the desired curved path. The analogue to this control method is a bicycle or motorcycle rider who removes his or her hands from the handlebars and then leans his or her body in the direction of the turn (to create the imbalance) and the bicycle or motorcycle wheel steers by itself to just the correct angle.

Another control method is via a control system designed to respond to changes in lateral force on the occupant cell structure 60 by creating the lean angle required to nullify the lateral force. An acceleration sensor 82 (FIG. 8) is located on the occupant cell structure 60 in such a position as to rotate with the occupant cell structure 60 about the lower parallelogram link's central axis of rotation. The lateral component of vehicle acceleration is thus perceived, if one exists, depending on whether the vehicle is turning or following a straight path. As the vehicle is steered, either by a human or by a computerized vehicle steering system, this lateral component of acceleration is generated and perceived. As the lean angle controller 84 (FIG. 8) receives this information, it responds by issuing a command to a lean angle servo 86 that rotates the occupant cell structure 60 relative to the parallelogram(s) 52. Lean angle is then generated by this closed loop control system until the lateral acceleration disappears. G-force nullification is thus executed.

Preferably, each wheel 54 is suspended by the upright 74 via some sort of suspension system. This can be in the form of a telescopic fork arrangement, similar to that of a suspended bicycle or motorcycle, or a four-bar linkage (not illustrated) between the steering tube (not illustrated) and the upright 74, or other equivalent suspension arrangement allowing for the vertical displacement of the wheel 54 in response to road surface variations, i.e. bumps. Ideally, to maximize comfort, this suspension is an active one, which proactively lifts the wheel 54 and tire up and sets it down again over these bumps.

Preferably, the active control software application(s) of the present disclosure, when utilized, is/are implemented as coded instructions stored in a memory and executed by a processor. The processor is a hardware device for executing such coded instructions. The processor can be any custom made or commercially available processor, a central processing unit (CPU), an auxiliary processor among several processors associated with the memory, a semiconductor-based microprocessor (in the form of a microchip or chip set), or generally any device for executing coded instructions. The processor is configured to execute software stored within the memory, to communicate data to and from the memory, and to generally control operations pursuant to the coded instructions. In an exemplary embodiment, the processor may include a mobile optimized processor, such as one optimized for power consumption and mobile applications. I/O interfaces can be used to receive user input and/or for providing system output. User input can be provided via, for example, a keypad, a touch screen, a scroll ball, a scroll bar, buttons, and/or the like. System output can be provided via a display device, such as a liquid crystal display (LCD), touch screen, and/or the like. The I/O interfaces can also include, for example, a serial port, a parallel port, a small computer system interface (SCSI), an infrared (IR) interface, a radio frequency (RF) interface, a universal serial bus (USB) interface, and/or the like. The I/O interfaces can include a GUI that enables a user to interact with the memory. Additionally, the I/O interfaces may further include an imaging device, i.e. camera, video camera, etc., as described herein.

The memory may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory may incorporate electronic, magnetic, optical, and/or other types of storage media. Note that the memory may have a distributed architecture, where various components are situated remotely from one another, but can be accessed by the processor. The software in memory can include one or more software programs, each of which includes an ordered listing of executable instructions for implementing logical functions. The software in the memory includes a suitable operating system (O/S) and programs. The operating system essentially controls the execution of other computer programs, and provides scheduling, input-output control, file and data management, memory management, and communication control and related services. The programs may include various applications, add-ons, etc. configured to provide end user functionality. The programs can include an application or "app" which provides various functionalities.

The active suspension alluded to herein may include an active chassis with rear air suspension and "Four-C" technology. Providing comfort and handling advantages while automatically maintaining ride height, it allows a driver/occupant to adapt the chassis to his or her preferences. To ensure comfort and handling even if the vehicle is heavily loaded, the self-adapting air suspension for the rear wheels keeps the ride height constant. "Four-C" technology monitors the vehicle, road, and driver up to 500 times per second, simultaneously adjusting each shock absorber to current road and driving conditions to maximize both ride comfort and driving/riding pleasure. Three chassis settings allow the driver/occupant to adapt the suspension to his or her mood and current road conditions. In "Comfort" mode, the suspension is tuned for maximum comfort, while "Eco" mode optimizes the suspension for low fuel-consumption. "Dynamic" mode enhances the vehicle's sporty characteristics with firmer, more dynamic suspension.

Although the present disclosure is illustrated and described herein with reference to preferred embodiments and specific examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following non-limiting claims for all purposes.

**Claims**

1. A system for nullifying one or more of lateral and longitudinal acceleration forces experienced by an occupant (10) of a vehicle in a seated or standing position while the vehicle is traveling along a travel surface, the system comprising:

   a chassis structure (50); and
   an occupant cell structure (60) one of coupled to and defined by the chassis structure (50);
   wherein the chassis structure (50) comprises an upper link (56) pivotably coupled to each of a first wheel assembly (54) and a second wheel assembly (54) and the occupant cell structure (60) and a lower link (58) pivotably coupled to each of the first wheel assembly (54) and the second wheel assembly (54) and the occupant cell structure (60); and
   wherein the upper link (56) and the lower link (58) define a parallelogram (52) and are configured to translate with respect to one another maintaining parallel sides of the parallelogram (52), thereby leaning the first wheel assembly (54), the second wheel assembly (54), and the occupant cell structure (60) in unison with respect to the travel surface.

2. The system of claim 1, wherein the system is operable for nullifying lateral acceleration forces and the upper link (56) and the lower link (58) are configured to translate transversely with respect to one another maintaining the parallel sides of the parallelogram (52), thereby leaning the first wheel assembly (54), the second wheel assembly (54), and the occupant cell structure (60) transversely in unison with respect to the travel surface.

3. The system of claim 1, wherein each of the first wheel assembly (54) and the second wheel assembly (54) is configured to both lean and rotate with respect to the chassis structure (50).

4. The system of claim 1, wherein the occupant cell structure (60) comprises one of a seated support and a standing support for the occupant (10).

5. The system of claim 1, wherein the occupant cell structure (60) is configured to lean within $\pm 17$ degrees from a perpendicular plane with respect to the travel surface.

6. The system of claim 1, wherein the occupant cell structure (60) is configured to lean with active assistance of one or more actuation mechanisms (86) coupled to one or more controllers (84).

7. The system of claim 6, wherein the occupant cell structure (60) is configured to lean with the active assistance of the one or more actuation mechanisms (86) coupled to the one or more controllers (84) responsive to feedback from one or more sensors or cameras (82).

8. A method for nullifying one or more of lateral and longitudinal acceleration forces experienced by an occupant (10) of a vehicle in a seated or standing position while the vehicle is traveling along a travel surface, the method comprising:

   providing a chassis structure (50);
   providing an occupant cell structure (60) one of coupled to and defined by the chassis structure (50); and
   leaning the occupant cell structure (60) with respect to the travel surface;
   wherein the chassis structure (50) comprises an upper link (56) pivotably coupled to each of a first wheel assembly (54) and a second wheel assembly (54) and the occupant cell structure (60) and a lower link (58) pivotably coupled to each of the first wheel assembly (54) and the second wheel assembly (54) and the occupant cell structure (60); and

wherein the upper link (56) and the lower link (58) define a parallelogram (52) and are configured to translate with respect to one another maintaining parallel sides of the parallelogram (52), thereby leaning the first wheel assembly (54), the second wheel assembly (54), and the occupant cell structure (60) in unison.

9. The method of claim 8, wherein the method is operable for nullifying lateral acceleration forces and the upper link (56) and the lower link (58) are configured to translate transversely with respect to one another maintaining the parallel sides of the parallelogram (52), thereby leaning the first wheel assembly (54), the second wheel assembly (54), and the occupant cell structure (60) transversely in unison with respect to the travel surface.

10. The method of claim 8, wherein each of the first wheel assembly (54) and the second wheel assembly (54) is configured to both lean and rotate with respect to the chassis structure (50).

11. The method of claim 8, wherein the occupant cell structure (60) comprises one of a seated support and a standing support for the occupant (10).

12. The method of claim 8, wherein the occupant cell structure (60) is configured to lean within $\pm 17$ degrees from a perpendicular plane with respect to the travel surface.

13. The method of claim 8, wherein the occupant cell structure (60) is configured to lean with active assistance of one or more actuation mechanisms (86) coupled to one or more controllers (84).

14. The method of claim 13, wherein the occupant cell structure (60) is configured to lean with the active assistance of the one or more actuation mechanisms (86) coupled to the one or more controllers (84) responsive to feedback from one or more sensors or cameras (82).

FIG. 1

FIG. 2

θ = ± 17°

22

10

24

10

θ = ± 17°

FIG. 3

EP 3 584 097 A1

$v = \omega_7$

10

$\theta$

$r$

$a_{lat} = v^i$

$ma_{lat}$

$mg$

FIG. 4

FIG. 5

FIG. 6

FIG. 7

```
┌─────────────────────────────┐
│     Acceleration Sensor     │
│             82              │
└─────────────────────────────┘              80
              │
              ▼
┌─────────────────────────────┐
│     Lean Angle Controller   │
│             84              │
└─────────────────────────────┘
              │
              ▼
┌─────────────────────────────┐
│      Lean Angle Servo       │
│             86              │
└─────────────────────────────┘
```

FIG. 8

Europäisches
Patentamt

European
Patent Office

Office européen
des brevets

# EUROPEAN SEARCH REPORT

Application Number

EP 19 18 0579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 279 047 A (DOVISON DAVID [GB]) 21 December 1994 (1994-12-21) | 1-3,5, 8-10,12 | INV. B60G3/20 B60G21/02 |
| Y | * figures 2a,2b,2d * | 4,11 | B62K5/10 |
| X | WO 2015/067760 A1 (BUTCHERS & BICYCLES APS [DK]) 14 May 2015 (2015-05-14) * figures 1-6 * | 1-3,5, 8-10,12 | |
| X | WO 2017/021905 A1 (PIAGGIO & C SPA [IT]) 9 February 2017 (2017-02-09) * figures 1,3 * | 1-3,5, 8-10,12 | |
| X | US 2014/124286 A1 (HAYASHI KOKI [JP]) 8 May 2014 (2014-05-08) * figures 2,3 * | 1-3, 5-10, 12-14 | |
| Y | WO 96/23478 A1 (DEKA PRODUCTS LP [US]) 8 August 1996 (1996-08-08) * figures 15-17 * | 4,11 | |

TECHNICAL FIELDS
SEARCHED (IPC)

B60G
B62K

The present search report has been drawn up for all claims

| Place of search | Date of completion of the search | Examiner |
|---|---|---|
| The Hague | 28 October 2019 | Savelon, Olivier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 0579

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2019

| Patent document cited in search report | | Publication date | Patent family member(s) | | Publication date |
|---|---|---|---|---|---|
| GB 2279047 | A | 21-12-1994 | NONE | | |
| WO 2015067760 | A1 | 14-05-2015 | AU | 2014345540 A1 | 09-06-2016 |
| | | | CA | 2929109 A1 | 14-05-2015 |
| | | | CN | 105829201 A | 03-08-2016 |
| | | | DE | 202014010970 U1 | 13-02-2017 |
| | | | EP | 3066001 A1 | 14-09-2016 |
| | | | US | 2016272264 A1 | 22-09-2016 |
| | | | WO | 2015067760 A1 | 14-05-2015 |
| WO 2017021905 | A1 | 09-02-2017 | CA | 2994376 A1 | 09-02-2017 |
| | | | CN | 108137117 A | 08-06-2018 |
| | | | EP | 3331754 A1 | 13-06-2018 |
| | | | JP | 2018526261 A | 13-09-2018 |
| | | | KR | 20180048636 A | 10-05-2018 |
| | | | TW | 201718316 A | 01-06-2017 |
| | | | US | 2018222527 A1 | 09-08-2018 |
| | | | WO | 2017021905 A1 | 09-02-2017 |
| US 2014124286 | A1 | 08-05-2014 | CN | 103687782 A | 26-03-2014 |
| | | | JP | 5741278 B2 | 01-07-2015 |
| | | | JP | 2013023166 A | 04-02-2013 |
| | | | US | 2014124286 A1 | 08-05-2014 |
| | | | WO | 2013015342 A1 | 31-01-2013 |
| WO 9623478 | A1 | 08-08-1996 | AT | 281138 T | 15-11-2004 |
| | | | AT | 527163 T | 15-10-2011 |
| | | | AU | 705704 B2 | 27-05-1999 |
| | | | CA | 2211738 A1 | 08-08-1996 |
| | | | CA | 2431070 A1 | 08-08-1996 |
| | | | CA | 2634029 A1 | 08-08-1996 |
| | | | DE | 69533729 D1 | 09-12-2004 |
| | | | DE | 69533729 T2 | 28-04-2005 |
| | | | DK | 0806929 T3 | 14-03-2005 |
| | | | EP | 0806929 A1 | 19-11-1997 |
| | | | EP | 1298041 A2 | 02-04-2003 |
| | | | ES | 2231785 T3 | 16-05-2005 |
| | | | FI | 973197 A | 01-08-1997 |
| | | | JP | 3722493 B2 | 30-11-2005 |
| | | | JP | H11500331 A | 12-01-1999 |
| | | | KR | 19980701909 A | 25-06-1998 |
| | | | NO | 319281 B1 | 11-07-2005 |
| | | | NZ | 282114 A | 26-06-1998 |
| | | | WO | 9623478 A1 | 08-08-1996 |

EPO FORM P0459

For more details about this annex : see Official Journal of the European Patent Office, No. 12/82